# EUROPÄISCHE PATENTSCHRIFT

(11) **EP 2 748 564 B1**
(45) Veröffentlichungstag und Bekanntmachung des Hinweises auf die Patenterteilung: **14.10.2015**
(21) Anmeldenummer: 12745657.2
(22) Anmeldetag: 23.07.2012
(51) Int. Cl.: G01D 11/24, B29C 45/00, B29C 45/14, B29L 31/34, G01D 11/30

(54) **FÜHRUNGSABSCHNITT EINES GEHÄUSES FÜR EINEN SENSOR**
GUIDE SECTION OF A SENSOR HOUSING
SECTION DE GUIDAGE D'UN BOÎTIER POUR UN CAPTEUR

(30) Priorität: 26.08.2011 DE 102011081637
(43) Veröffentlichungstag der Anmeldung: 02.07.2014
(73) Patentinhaber: ZF Friedrichshafen AG, 88038 Friedrichshafen (DE)
(72) Erfinder: RASCHKE, Dirk, 91275 Auerbach (DE)
(86) Internationale Anmeldenummer: PCT/EP2012/064403
(87) Internationale Veröffentlichungsnummer: WO 2013/029874

(56) Entgegenhaltungen:
- EP-A2- 1 059 506
- US-A1- 2011 162 223

## Beschreibung

Die vorliegende Erfindung bezieht sich auf einen Führungsabschnitt eines Gehäuses für einen Sensor, insbesondere für ein Fahrzeuggetriebe, auf ein Gehäuse für einen Sensor, insbesondere für ein Fahrzeuggetriebe, auf einen Sensor, insbesondere für ein Fahrzeuggetriebe, und auf ein Verfahren zum Herstellen eines Gehäuses für einen Sensor, insbesondere für ein Fahrzeuggetriebe.

Ein Gehäuse für einen Positionssensor ist häufig aus Kunststoff mittels einer Spritzgusstechnik hergestellt. Wenn das Gehäuse beispielsweise einen Hinterschnitt bzw. eine Hinterschneidung für eine Führung eines beweglichen Sensorelements aufweist, sind üblicherweise zusätzliche, meist seitlich bzw. quer zur Öffnungsrichtung des Spritzgusswerkzeugs zu bewegende Werkzeugteile, so genannte Werkzeugschieber, erforderlich. Bevor das Spritzgusswerkzeug geöffnet werden kann bzw. bevor das Kunststoffspritzteil ausgeworfen werden kann, sind dann die Werkzeugschieber aus dem Spritzgusswerkzeug herauszufahren.

Die DE 10 2009 002 005 A1 offenbart einen Positionssensor zur Erfassung einer Position eines Elements, insbesondere eines Getriebeelements.

Die EP 1 059 506 A2 zeigt einen Wegaufnehmer, in welchem ein Stößel, an welchem ein Magnet befestigt ist, in zwei zueinander symmetrischen, in Spritzgußtechnik hergestellten Halbschalen geführt wird

Die US 2011 / 0 162 223 A1 zeigt eine Messskala, die sich in einem Führungsabschnitt mit alternierend angeordneten Aussparungen und Führungsteilen bewegt.

Vor diesem Hintergrund schafft die vorliegende Erfindung einen verbesserten Führungsabschnitt eines Gehäuses für einen Sensor, insbesondere für ein Fahrzeuggetriebe, ein verbessertes Gehäuse für einen Sensor, insbesondere für ein Fahrzeuggetriebe, einen verbesserten Sensor, insbesondere für ein Fahrzeuggetriebe, und ein verbessertes Verfahren zum Herstellen eines Gehäuses für einen Sensor, insbesondere für ein Fahrzeuggetriebe, gemäß den Hauptansprüchen. Vorteilhafte Ausgestaltungen ergeben sich aus den Unteransprüchen und der nachfolgenden Beschreibung.

Die vorliegende Erfindung beruht auf der Erkenntnis, dass ein Führungsabschnitt eines Sensorgehäuses so ausgeformt sein kann, dass der Führungsabschnitt beispielsweise eine Geometrie mit lediglich partiellen Hinterschnitten aufweist. Ein bewegliches Sensorelement des Sensors kann mittels des Führungsabschnitts geführt werden, wobei der Führungsabschnitt in einem Bereich alternierend angeordnete Aussparungen und Führungsteile aufweist.

Vorteilhafterweise kann ein Gehäuse für einen Sensor aufgrund eines so ausgeformten Führungsabschnitts unter Verwendung einfacher Spritzgusswerkzeuge und insbesondere ohne seitliche Werkzeugschieber gegossen und entformt werden. Die Führungsfunktion des Führungsabschnitts bleibt auch bei ausschließlich partiellen Hinterschnitten erhalten. Daher kann ein so gestalteter Führungsabschnitt eine Herstellung des Gehäuses unkomplizierter, effizienter und wirtschaftlicher machen.

Die vorliegende Erfindung schafft einen Führungsabschnitt eines Gehäuses für einen Sensor, insbesondere für ein Fahrzeuggetriebe, wobei der Führungsabschnitt zum Führen eines beweglichen Sensorelements des Sensors entlang einer Führungsachse ausgebildet ist und einen ersten Führungsbereich, einen zweiten Führungsbereich und einen den ersten und den zweiten Führungsbereich verbindenden dritten Führungsbereich aufweist, wobei eine Führungsoberfläche des ersten Führungsbereichs und eine Führungsoberfläche des zweiten Führungsbereichs einander gegenüberliegend angeordnet sind, und der zweite Führungsbereich entlang der Führungsachse eine Mehrzahl von alternierend angeordneten Aussparungen und Führungsteilen aufweist, dadurch gekennzeichnet, dass der erste Führungsbereich entlang der Führungsachse eine Mehrzahl von alternierend angeordneten Öffnungen und Auflageteilen aufweist, wobei eine einzelne der Öffnungen einem einzelnen der Führungsteile des zweiten Führungsbereichs gegenüberliegend angeordnet ist.

Bei dem Fahrzeug kann es sich um ein Kraftfahrzeug, wie beispielsweise einen Personenkraftwagen, Lastkraftwagen oder ein sonstiges Nutzfahrzeug, mit einem Schaltgetriebe handeln. Bei dem Getriebe kann es sich um ein Direktschaltgetriebe oder ein automatisch geschaltetes Getriebe handeln. Bei dem Sensor kann es sich um einen Positionssensor bzw. Wegsensor oder dergleichen handeln. Der Sensor kann dabei als ein Magnetfeldsensor ausgebildet sein. Der Sensor kann ein stationäres Sensorelement und ein bewegliches Sensorelement aufweisen. Bei dem beweglichen Sensorelement kann es sich beispielsweise um einen Magnetschlitten oder dergleichen handeln. Das bewegliche Sensorelement kann sich entlang der Führungssachse an einer Gehäuseoberfläche des Gehäuses bewegen. Der Führungsabschnitt ist dabei ausgebildet, um das bewegliche Sensorelement in Querrichtungen zu der Führungssachse zu stabilisieren und in zwei Richtungen entlang der Führungsachse zu führen, zu lenken oder dergleichen. Bei dem Führungsabschnitt kann es sich um eine Führungsschiene oder dergleichen handeln. Der erste Führungsbereich, der zweite Führungsbereich und/oder der dritte Führungsbereich können jeweils eine Führungsoberfläche aufweisen. Eine solche Führungsoberfläche ist ausgebildet, um eine Kontaktfläche bzw. Anlagefläche für das bewegliche Sensorelement zu bilden. Somit kann das bewegliche Sensorelement in Kontakt mit zumindest einer der Führungsoberflächen gelangen, wenn das bewegliche Sensorelement mittels des Führungsabschnitts an dem Gehäuse geführt wird. Der zweite Führungsbereich weist zumindest eine Aussparung und eine Mehrzahl von Führungsteilen auf. Die Aussparungen und Führungsteile sind entlang der Führungsachse abwechselnd angeordnet.

Somit kann eine Aussparung zwischen zwei Führungsteilen angeordnet sein. Daher weist auch die Führungsoberfläche des zweiten Führungsbereichs die abwechselnd angeordneten Aussparungen und Führungsteile auf.

Hierbei weist der erste Führungsbereich entlang der Führungsachse eine Mehrzahl von alternierend angeordneten Öffnungen und Auflageteilen auf. Dabei ist eine einzelne der Öffnungen einem einzelnen der Führungsteile des zweiten Führungsbereichs gegenüberliegend angeordnet.

Ein einzelner der Auflageteile kann einer einzelnen der Aussparungen des zweiten Führungsbereichs gegenüberliegend angeordnet sein. An einem Punkt entlang der Führungsachse können somit eine Öffnung des ersten Führungsbereichs und ein Führungsteil des zweiten Führungsbereichs oder ein Auflageteil des ersten Führungsbereichs und eine Aussparung des zweiten Führungsbereichs angeordnet sein. So weist auch die Führungsoberfläche des ersten Führungsbereichs die abwechselnd angeordneten Öffnungen und Auflageteile auf. Eine solche Ausführungsform bietet den Vorteil, dass somit partielle Hinterschnitte in Gestalt der Führungsteile des zweiten Führungsbereichs aufgrund der den Führungsteilen gegenüberliegenden Öffnungen in dem ersten Führungsbereich auf besonders einfache Weise mittels eines Spritzgussvorgangs ohne Werkzeugschieber, d. h. mittels so genannter Auf-Zu-Werkzeuge erzeugt werden können. Somit kann der Führungsabschnitt bzw. das Gehäuse mittels einfacher Spritzgusswerkzeuge und auf kostengünstige und schnelle Weise hergestellt werden.

Gemäß einer Ausführungsform können der erste Führungsbereich, der zweite Führungsbereich und der dritte Führungsbereich ein U-förmiges Querschnittsprofil des Führungsabschnitts ausbilden. Dabei können die Führungsteile des zweiten Führungsbereichs als Vorsprünge bezüglich des dritten Führungsbereichs ausgeformt sein. Auch können die Aussparungen des zweiten Führungsbereichs Lücken, Zwischenräume oder dergleichen zwischen benachbarten Führungsteilen bzw. Vorsprüngen darstellen. Somit können die Führungsteile und Aussparungen ein zinnenförmiges Profil des zweiten Führungsbereichs ausbilden. Insbesondere kann sich dabei der dritte Führungsbereich orthogonal bzw. innerhalb von Fertigungstoleranzen orthogonal zu dem ersten und/oder dem zweiten Führungsbereich erstrecken. Eine solche Ausführungsform bietet den Vorteil, dass ein bewegliches Sensorelement mittels des so ausgestalteten Führungsabschnitts zuverlässig, positionsgenau und sicher geführt werden kann.

Insbesondere kann der erste Führungsbereich durch einen Randbereich einer Gehäuseoberfläche zum Führen des beweglichen Sensorelements gebildet sein. So kann sich der Führungsabschnitt entlang einer Seitenkante der Gehäuseoberfläche erstrecken. Bei der Gehäuseoberfläche kann es sich um eine Oberfläche des Gehäuses handeln, entlang der eine Bewegung des beweglichen Sensorelements in der Führungsachse stattfinden kann. Eine solche Ausführungsform bietet den Vorteil, dass der Führungsabschnitt Platz sparend in das Gehäuse integriert werden kann. Auch kann eine Stabilität des Führungsabschnitts erhöht werden.

Auch kann ein Anschlagbereich zum Begrenzen einer Bewegung des beweglichen Sensorelements entlang der Führungsachse vorgesehen sein. Dabei kann der Anschlagbereich an einem ersten Ende des Führungsabschnitts angeordnet sein. Der Anschlagbereich kann beispielsweise als ein Teil des dritten Führungsbereichs ausgebildet sein, insbesondere als ein Vorsprung, der sich von dem dritten Führungsbereich aus in die gleiche Richtung wie die Führungsteile erstreckt, jedoch in einer Ebene orthogonal zu den Führungsteilen. Der Anschlagbereich kann somit eine Bewegung des beweglichen Sensorelements entlang der Führungsachse in eine Richtung begrenzen. Ein solcher Anschlagbereich bietet den Vorteil, dass ein bewegliches Sensorelement in dem Führungsabschnitt entlang eines Bewegungsweges mit einem festgelegten Ende geführt werden kann. Ein Herausfallen des beweglichen Sensorelementes an dem ersten Ende des Führungsabschnitts, an dem der Anschlagbereich vorgesehen ist, kann somit verhindert werden. Somit können Sicherheit und Genauigkeit bei der Führung des beweglichen Sensorelementes verbessert werden.

Zudem kann der dritte Führungsbereich an einem zweiten Ende des Führungsabschnitts ein flexibles Rastelement zum Begrenzen einer Bewegung des beweglichen Sensorelements entlang der Führungsachse aufweisen. Das zweite Ende des Führungsabschnitts kann von dem ersten Ende, an dem der Anschlagbereich vorgesehen sein kann, abgewandt angeordnet sein. Somit ist das flexible Rastelement an einem anderen Ende des Führungsabschnitts als der Anschlagbereich vorgesehen. Das flexible Rastelement kann elastisch federnd ausgeführt sein, um eine Bewegung orthogonal zu der Führungsachse ausführen zu können. Das flexible Rastelement kann beispielsweise einen Rasthaken an einem elastisch federnden Arm oder dergleichen aufweisen. Das flexible Rastelement kann beispielsweise eine Einbringung eines beweglichen Sensorelements in den Führungsabschnitt ermöglichen, wobei das flexible Rastelement aus einer Ruhestellung entgegen einer Erstreckungsrichtung der Führungsteile in eine ausgelenkte Stellung wegfedern kann. Wenn das bewegliche Sensorelement in den Führungsabschnitt eingebracht ist, kann das flexible Rastelement in die Ruhestellung zurückfedern. In diesem Zustand kann das flexible Rastelement einen Anschlag bzw. eine Verriegelung des beweglichen Sensorelements an dem zweiten Ende des Führungsabschnitts darstellen. Zur Entfernung des beweglichen Sensorelementes aus dem Führungsabschnitt kann das flexible Rastelement in die ausgelenkte Stellung ausgelenkt werden. Ein solches flexibles Rastelement bietet den Vorteil, dass der Führungsabschnitt ein bewegliches Sensorelement sicher und vor Herausfallen geschützt führen kann.

Dabei kann der Führungsabschnitt mittels eines Spritzgussvorgangs einstückig aus einem Kunststoffmaterial hergestellt sein. Eine solche Ausführungsform bietet den Vorteil, dass der Führungsabschnitt bzw. das Gehäuse auf einfache und kostengünstige Weise, auch in großer Stückzahl, hergestellt werden kann.

Die vorliegende Erfindung schafft ferner ein Gehäuse für einen Sensor, insbesondere für ein Fahrzeuggetriebe, wobei das Gehäuse eine Gehäuseoberfläche zum Führen eines beweglichen Sensorelements des Sensors entlang einer Führungsachse aufweist, gekennzeichnet durch zumindest einen oben genannten Führungsabschnitt, der entlang einer Seite der Gehäuseoberfläche angeordnet ist.

Bei dem Gehäuse kann es sich auch um einen zweiteilig oder mehrteilig ausgeführtes Gehäuse handeln, wobei der Führungsabschnitt an einem Gehäuseteil angeordnet ist. In Verbindung mit dem Gehäuse kann ein oben genanntes Gehäuseteil vorteilhaft eingesetzt bzw. verwendet werden, um eine zuverlässige, sichere und präzise Führung eines beweglichen Sensorelements an dem Gehäuse zu ermöglichen.

Gemäß einer Ausführungsform können ein erster Führungsabschnitt, der entlang einer ersten Seite der Gehäuseoberfläche angeordnet ist, ein zweiter Führungsabschnitt, der entlang einer der ersten Seite gegenüberliegenden, zweiten Seite der Gehäuseoberfläche angeordnet ist, und eine zumindest teilweise unterbrochene Führungsrippe zum Führen des beweglichen Sensorelements, die an der Gehäuseoberfläche zwischen dem ersten Führungsabschnitt und dem zweiten Führungsabschnitt angeordnet ist und sich entlang der Führungsachse erstreckt, vorgesehen sein. Eine solche Ausführungsform bietet den Vorteil, dass ein bewegliches Sensorelement auf diese Weise besonders positionsgenau und sicher geführt werden kann.

Die vorliegende Erfindung schafft ferner einen Sensor, insbesondere für ein Fahrzeuggetriebe, wobei der Sensor ein bewegliches Sensorelement aufweist, dadurch gekennzeichnet, dass der Sensor ein oben genanntes Gehäuse aufweist und das bewegliche Sensorelement in dem zumindest einen Führungsabschnitt des Gehäuses beweglich aufgenommen ist.

In Verbindung mit dem Sensor kann ein oben genanntes Gehäuse vorteilhaft eingesetzt bzw. verwendet werden, um ein Element des Sensors beweglich und positionsmäßig exakt definiert zu führen.

Die vorliegende Erfindung schafft ferner ein Verfahren zum Herstellen eines Gehäuses für einen Sensor, insbesondere für ein Fahrzeuggetriebe, wobei das Gehäuse eine Gehäuseoberfläche zum Führen eines beweglichen Sensorelements des Sensors entlang einer Führungsachse und zumindest einen entlang einer Seite der Gehäuseoberfläche angeordneten Führungsabschnitt zum Führen des beweglichen Sensorelements des Sensors entlang der Führungsachse aufweist, wobei der Führungsabschnitt einen ersten Führungsbereich, einen zweiten Führungsbereich und einen den ersten und den zweiten Führungsbereich verbindenden dritten Führungsbereich aufweist, wobei eine Führungsoberfläche des ersten Führungsbereichs und eine Führungsoberfläche des zweiten Führungsbereichs einander gegenüberliegend angeordnet sind, wobei der zweite Führungsbereich entlang der Führungsachse eine Mehrzahl von alternierenden Aussparungen und Führungsteilen aufweist, dadurch gekennzeichnet, dass das Verfahren einen Schritt des Aneinanderpressens zweier Werkzeughälften, um eine Spritzgusskavität zu erzeugen, wobei zwischen den zwei Werkzeughälften in dem aneinander gepressten Zustand eine unebene Teilungsebene gebildet ist, wobei eine erste der zwei Werkzeughälften erste Vorsprünge zur Bildung der Führungsoberfläche des ersten Führungsbereichs aufweist und eine zweite der zwei Werkzeughälften zweite Vorsprünge zur Bildung der Führungsoberfläche des zweiten Führungsbereichs aufweist, einen Schritt des Einspritzens von Kunststoffmaterial in die Spritzgusskavität, um das Gehäuse zu gießen, und einen Schritt des Auseinanderbewegens der zwei Werkzeughälften durch eine Bewegung der zwei Werkzeughälften in entgegengesetzten Richtungen entlang einer gemeinsamen Entformungsachse aufweist, um das gegossene Gehäuse zu entformen.

In Verbindung mit dem Verfahren kann ein oben genanntes Gehäuse vorteilhaft hergestellt werden. Bei den Werkzeughälften kann es sich um Spritzgusswerkzeuge behandeln. Die Werkzeughälften brauchen keine Hälften zu sein, sondern können auf andere Weise aufgeteilt sein, beispielsweise ein Viertel und drei Viertel. Bei den Werkzeughälften kann es sich somit um zwei Werkzeugteile handeln, welche die Spritzgusskavität umschließen, wenn die Werkzeughälften aneinander gepresst sind. Bei der Spritzgusskavität kann es sich um einen Hohlraum handeln, in den beispielsweise verflüssigtes Kunststoffmaterial eingespritzt werden kann. Somit wird in der Spritzgusskavität das Gehäuse geformt. Die aneinander gepressten Werkzeughälften bilden daher die Form für das Gehäuse. Flächen, an denen die Werkzeughälften einander berühren, bilden die Teilungsebene der Werkzeughälften. Die Teilungsebene braucht hierbei nicht plan bzw. eben zu sein. Die Vorsprünge der Werkzeughälften können über übrige Bereiche der Werkzeughälften vorstehen und somit eine unebene Teilungsebene ausbilden. Somit können Vorsprünge einer Werkzeughälfte weiter in die andere Werkzeughälfte hineinragen als übliche Bereiche der Werkzeughälfte und umgekehrt. Bei der Entformung werden die zusammengepressten Werkzeughälften wieder voneinander entfernt. Somit kann das gegossene Gehäuse freigelegt und entnommen werden.

Die Erfindung wird anhand der beigefügten Zeichnungen beispielhaft näher erläutert. Es zeigen:
- Fig. 1: eine schematische Darstellung eines Fahrzeugs mit einem Sensor für ein Fahrzeuggetriebe, gemäß einem Ausführungsbeispiel der vorliegenden Erfindung;
- Fig. 2: eine perspektivische Darstellung eines Gehäuses eines Sensors für ein Fahrzeuggetriebe, gemäß einem Ausführungsbeispiel der vorliegenden Erfindung;
- Fig. 3: eine Draufsicht auf ein Gehäuse eines Sensors für ein Fahrzeuggetriebe, gemäß einem Ausführungsbeispiel der vorliegenden Erfindung;
- Figuren 4A und 4B: Querschnittsansichten von Führungsabschnitten eines Gehäuses eines Sensors für ein Fahrzeuggetriebe, gemäß einem Ausführungsbeispiel der vorliegenden Erfindung; und
- Fig. 5: ein Ablaufdiagramm eines Verfahrens gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

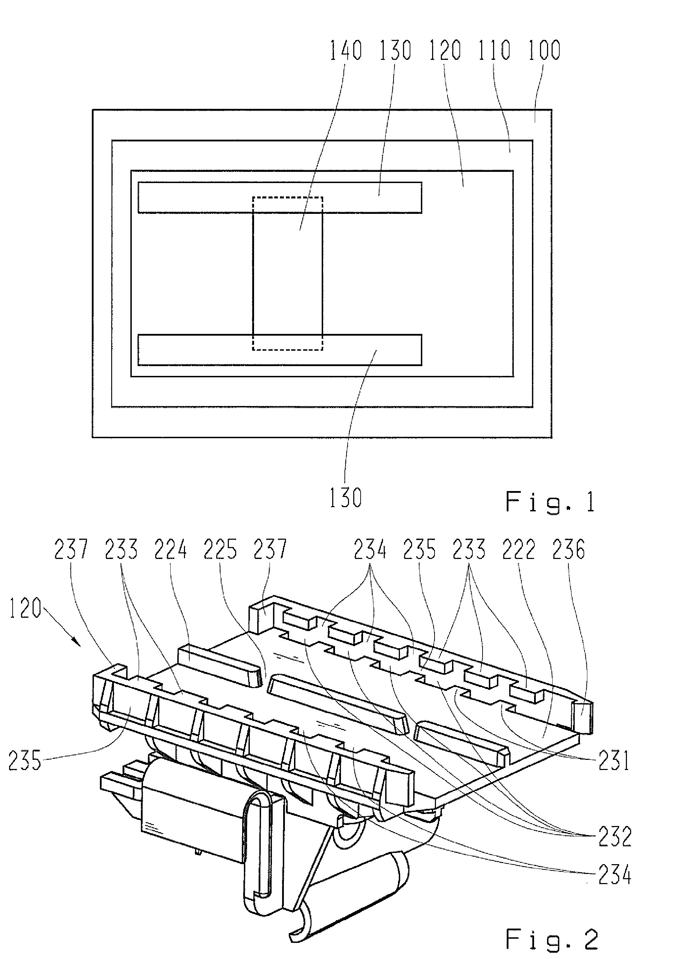

Fig. 1 zeigt eine schematische Darstellung eines Fahrzeugs 100 mit einem Sensor 110 für ein Fahrzeuggetriebe, gemäß einem Ausführungsbeispiel der vorliegenden Erfindung. Der Sensor 110 ist durch ein Gehäuse 120 mit beispielhaft zwei Führungsabschnitten 130 und ein bewegliches Sensorelement 140 gebildet. Bei dem Sensor 110 kann sich beispielsweise um einen Positionssensor handeln. Auch wenn es in Fig. 1 nicht dargestellt ist, kann der Sensor 110 auch weitere Elemente aufweisen, beispielsweise elektronische Elemente, Sensorelemente und dergleichen. Die zwei Führungsabschnitte 130 des Gehäuses 120 sind entlang gegenüberliegender Seitenkanten des Gehäuses 120 bzw. einer Gehäuseoberfläche des Gehäuses 120 angeordnet. Die zwei Führungsabschnitte 130 weisen eine gemeinsame Haupterstreckungsrichtung auf. Die gemeinsame Haupterstreckungsrichtung der zwei Führungsabschnitte 130 entspricht hierbei einer Führungsachse, entlang der das bewegliche Sensorelement 140 zwischen einem ersten Ende und einem zweiten Ende der zwei Führungsabschnitte 130 mittels der zwei Führungsabschnitte 130 geführt werden kann bzw. beweglich angeordnet ist. Bei dem beweglichen Sensorelement 140 kann es sich beispielsweise um einen Magnetschlitten handeln.

Fig. 2 zeigt eine perspektivische Darstellung eines Gehäuses 120 eines Sensors für ein Fahrzeuggetriebe, gemäß einem Ausführungsbeispiel der vorliegenden Erfindung. Bei dem Gehäuse 120 kann es sich um das Gehäuse aus Fig. 1 handeln. Gezeigt sind eine Gehäuseoberfläche 222 mit einer Führungsrille 224 sowie Unterbrechungen 225 in der Führungsrille, und zwei Führungsabschnitte zum Führen eines beweglichen Sensorelements des Sensors entlang einer Führungsachse. Ein erster der zwei Führungsabschnitte ist aus einem ersten Führungsbereich, der Auflageteile 231 sowie Öffnungen 232 aufweist, einem zweiten Führungsbereich, der Führungsteile 233 sowie Aussparungen 234 aufweist, einem dritten Führungsbereich 235 mit einem Rastelement 236, und einem Anschlagbereich 237 gebildet. In Fig. 2 ist der erste Führungsabschnitt im Hintergrund dargestellt. Ein zweiter der zwei Führungsabschnitte entspricht dem ersten Führungsabschnitt mit der Ausnahme, dass der dritte Führungsbereich 235 ohne das Rastelement 236 ausgeformt ist. In Fig. 2 ist der zweite Führungsabschnitt im Vordergrund dargestellt.

Das Gehäuse 120 weist einen plattenförmigen Hauptkörper auf. Das Gehäuse 120 weist an einer Hauptoberfläche des plattenförmigen Hauptkörpers die Gehäuseoberfläche 222 auf. Die Gehäuseoberfläche 222 ist planar bzw. plan oder eben ausgebildet. Die Gehäuseoberfläche 222 bzw. der plattenförmige Hauptkörper des Gehäuses 120 weist beispielhaft einen im Wesentlichen rechteckigen Grundriss auf. Die Führungsrille 224 erstreckt sich an der Gehäuseoberfläche 222 geradlinig von einem Ende des plattenförmigen Hauptkörpers bzw. der Gehäuseoberfläche 222 zu einem gegenüberliegenden Ende des plattenförmigen Hauptkörpers bzw. der Gehäuseoberfläche 222. Insbesondere erstreckt sich die Führungsrille 224 an der Gehäuseoberfläche 222 geradlinig von einer Schmalseitenkante des plattenförmigen Hauptkörpers zu einer gegen-überliegenden Schmalseitenkante des plattenförmigen Hauptkörpers. Die Führungsrille 224 erstreckt sich entlang einer Führungsachse, entlang derer sich das bewegliche Sensorelement in dem Führungsabschnitten bewegen kann. Die Führungsrille 224 ist als ein länglicher Vorsprung bzw. eine längliche Erhebung bezüglich der Gehäuseoberfläche 222 ausgebildet. Gemäß dem in Fig. 2 dargestellten Ausführungsbeispiel der vorliegenden Erfindung weist die Führungsrille 224 drei Abschnitte auf. Anders ausgedrückt weist die Führungsrille 224 zwei Unterbrechungen 225 bzw. Unterbrechungsstellen auf. In einem Bereich der Unterbrechungen 225 beträgt bezüglich der Gehäuseoberfläche 222 eine Höhe der Führungsrille 224 null.

Die zwei Führungsabschnitte sind in zwei gegenüberliegenden Randbereichen des plattenförmigen Hauptkörpers des Gehäuses 120 angeordnet. Insbesondere erstrecken sich die zwei Führungsabschnitte entlang gegenüberliegender Langseitenkanten des plattenförmigen Hauptkörpers bzw. der Gehäuseoberfläche 222 des Gehäuses 120. Die zwei Führungsabschnitte erstrecken sich entlang der Führungsachse. Bei den Führungsabschnitten handelt es sich um Führungsschienen für ein bewegliches Sensorelement, beispielsweise einen Magnetschlitten des Sensors. Anordnung und Ausrichtung von Elementen bzw. Merkmalen des ersten der zwei Führungsabschnitte ist hierbei mit Ausnahme des Rastelements 236 spiegelbildlich bezüglich des zweiten der zwei Führungsabschnitte, wobei eine Spiegelebene durch eine Längserstreckungsrichtung in der Führungsrille 224 repräsentiert sein kann. Von dem zweiten der zwei Führungsabschnitte sind in der perspektivischen Ansicht in Fig. 2 lediglich der dritte Führungsbereich 235, genauer gesagt eine von einer Führungsoberfläche abgewandte Außenoberfläche des dritten Führungsbereichs 235, und die Führungsteile 233 und Aussparungen 234 des zweiten Führungsbereichs dargestellt. An der Außenoberfläche des dritten Führungsbereichs 235 ist eine Mehrzahl entlang der Führungsachse voneinander beabstandeter Rippen angeordnet, die sich quer zu der Führungsachse erstrecken. Im Folgenden wird der erste der zwei Führungsabschnitte als der Führungsabschnitt stellvertretend für beide Führungsabschnitte beschrieben, wobei ein Aufbau des ersten der Führungsabschnitte einem Aufbau des zweiten der Führungsabschnitte mit der Ausnahme entspricht, dass lediglich der erste der zwei Führungsabschnitte das Rastelement 236 aufweist.

Der erste Führungsbereich des Führungsabschnitts ist durch den Randbereich der Langseitenkante der Gehäuseoberfläche 222 gebildet, entlang derer sich der Führungsabschnitt erstreckt. Entlang der Führungsachse weist der erste Führungsbereich des Führungsabschnitts bzw. der Randbereich der Langseitenkante der Gehäuseoberfläche 222 eine Reihe von abwechselnd angeordneten Öffnungen 232 und Auflageteilen 231 auf. Gemäß dem in Fig. 2 gezeigten Ausführungsbeispiel sind beispielhaft sechs Öffnungen 232 und beispielhaft sechs Auflageteile 231 dargestellt. Bei den Öffnungen 232 kann es sich um Schlitze oder Durchgangsöffnungen handeln. Die Öffnungen 232 können auch als Aussparungen in der Gehäuseoberfläche 222 bzw. Oberflächenseite des Gehäuses 120 verstanden werden. Der erste Führungsbereich kann beispielsweise lediglich im Bereich der Auflageteile 231 mit dem dritten Führungsbereich 235 verbunden sein.

Der dritte Führungsbereich 235 erstreckt sich innerhalb von Fertigungstoleranzen im Wesentlichen orthogonal zu dem ersten Führungsbereich. Der dritte Führungsbereich 235 ist als eine durchgehende Wand ausgebildet. Der dritte Führungsbereich 235 verbindet den ersten Führungsbereich und den zweiten Führungsbereich miteinander. An einem in Fig. 2 rechts dargestellten Ende des dritten Führungsbereichs 235 ist das Rastelement 236 angeordnet. Das Rastelement 236 kann als ein flexibles Rastelement ausgeführt sein. Das Rastelement 236 kann ausgebildet sein, um in eine Richtung weg von der Führungsrille 234 elastisch verformbar zu sein. Das Rastelement 236 kann dazu einen flexiblen Abschnitt aufweisen, der nicht mit dem ersten Führungsbereich verbunden ist. Das Rastelement 236 kann auch einen Verriegelungsabschnitt in Gestalt eines Hakens, eines Vorsprungs oder dergleichen aufweisen. Der Verriegelungsabschnitt kann an einem freien Ende des flexiblen Abschnitts angeordnet sein.

Der zweite Führungsbereich erstreckt sich innerhalb von Fertigungstoleranzen im Wesentlichen orthogonal zu dem dritten Führungsbereich 235. Der zweite Führungsbereich erstreckt sich innerhalb von Fertigungstoleranzen im Wesentlichen parallel zu dem ersten Führungsbereich. Entlang der Führungsachse weist der zweite Führungsbereich des Führungsabschnitts eine Reihe von abwechselnd angeordneten Aussparungen 234 und Führungsteilen 233 auf. Gemäß dem in Fig. 2 gezeigten Ausführungsbeispiel sind beispielhaft sechs Aussparungen 234 und beispielhaft sechs Führungsteile 233 dargestellt. Bei den Führungsteilen 233 kann es sich um Vorsprünge bezüglich des dritten Führungsbereichs 235 handeln. Die Führungsteile 233 erstrecken sich innerhalb von Fertigungstoleranzen im Wesentlichen orthogonal von dem dritten Führungsbereich 235 weg. Somit kann der zweite Führungsbereich entlang der Führungsachse ein zinnenförmiges Profil von Aussparungen 234 und Führungsteilen 233 aufweisen.

Der Anschlagbereich 237 des Führungsabschnitts ist an einem in Fig. 2 links gezeigten Ende des Führungsabschnitts angeordnet. Der Anschlagbereich 237 umfasst ein Wandelement, das sich innerhalb von Fertigungstoleranzen im Wesentlichen orthogonal zu dem dritten Führungsbereich 235 sowie zu dem ersten bzw. zweiten Führungsbereich erstreckt. Der Anschlagbereich 237 ist somit an einem von dem Rastelement 236 abgewandten Ende des Führungsabschnitts angeordnet. Der Anschlagbereich ist mit dem dritten Führungsbereich 235 und dem ersten Führungsbereich bzw. dem Randbereich der Langseitenkante der Gehäuseoberfläche 222 verbunden. Der Anschlagbereich 237 kann auch einen um im Wesentlichen 90 Grad zu der Führungsrille 224 hin geknickten Teil des dritten Führungsbereichs 235 repräsentieren.

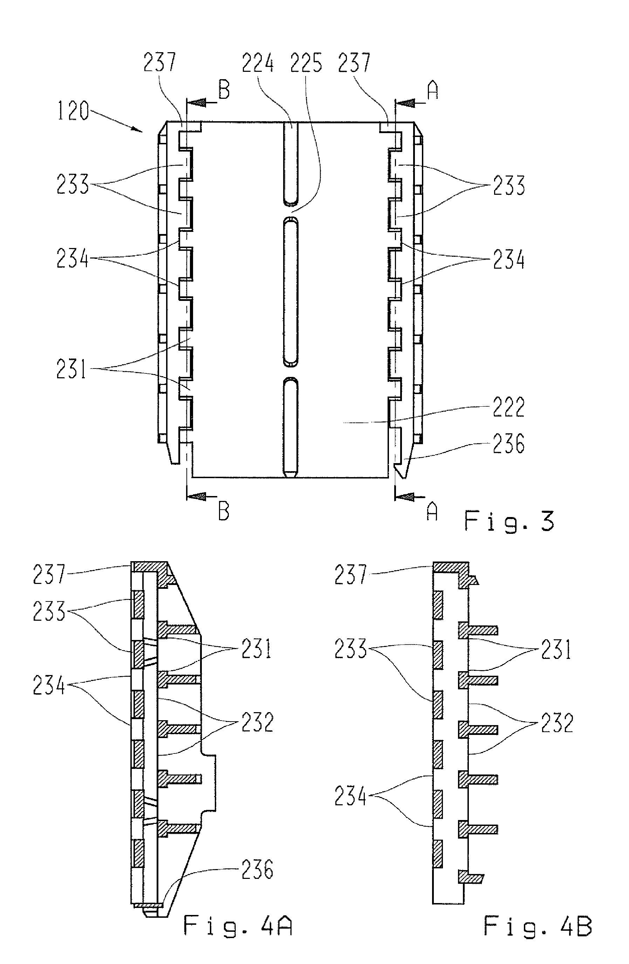

Fig. 3 zeigt eine Draufsicht auf ein Gehäuse 120 eines Sensors für ein Fahrzeuggetriebe, gemäß einem Ausführungsbeispiel der vorliegenden Erfindung. Bei dem Gehäuse 120 kann es sich um das Gehäuse aus Fig. 1 bzw. Fig. 2 handeln. Dabei kann Fig. 3 das Gehäuse aus Fig. 2 aus einer anderen Perspektive zeigen. Genau gesagt ist das Gehäuse aus Fig. 2 in der Darstellung von Fig. 3 in einer Draufsicht auf die Gehäuseoberfläche dargestellt. In Fig. 3 sind die Öffnungen des ersten Führungsbereichs des Führungsabschnitts durch die Führungsteile 233 des zweiten Führungsbereichs verdeckt. Im Bereich der Aussparungen 234 des zweiten Führungsbereichs sind die Auflageteile 231 des ersten Führungsbereichs sichtbar. Somit ist in Fig. 3 die abwechselnde Anordnung der Aussparungen 234 und Führungsteile 233 des zweiten Führungsbereichs erkennbar. Ferner ist erkennbar, dass in dem zweiten Führungsabschnitt die Führungsteile 233 des zweiten Führungsbereichs über den Öffnungen des ersten Führungsbereichs angeordnet sind und die Aussparungen 234 des zweiten Führungsbereichs über den Auflageteilen 231 des ersten Führungsbereichs angeordnet sind. Somit sind die Führungsteile 233 des zweiten Führungsbereichs und die Öffnungen des ersten Führungsbereichs gegeneinander ausgefluchtet. Ebenfalls sind die Aussparungen 234 des zweiten Führungsbereichs und die Auflageteile 231 des ersten Führungsbereichs gegeneinander ausgefluchtet. Die Führungsteile 233 des zweiten Führungsbereichs und die Öffnungen des ersten Führungsbereichs können abgesehen von herstellungsbedingten Abweichungen, die gleiche Größe und die gleiche Form aufweisen. Ebenso können die Aussparungen 234 des zweiten Führungsbereichs und die Auflageteile 231 des ersten Führungsbereichs abgesehen von herstellungsbedingten Abweichungen, die gleiche Größe und die gleiche Form aufweisen.

Ferner sind in Fig. 3 eine erste Schnittlinie A-A durch den Führungsabschnitt mit dem Rastelement 236 sowie eine zweite Schnittlinie B-B durch den Führungsabschnitt ohne das Rastelement 236 gezeigt. Die Schnittlinien verlaufen entlang der Führungsachse durch den gesamten Führungsabschnitt, wobei die Führungsteile 233 von den Schnittlinien geschnitten werden.

Fig. 4A zeigt eine Querschnittsansicht eines Führungsabschnitts eines Gehäuses eines Sensors für ein Fahrzeuggetriebe, gemäß einem Ausführungsbeispiel der vorliegenden Erfindung, entlang der Schnittlinie A-A aus Fig. 3. Bei dem Führungsabschnitt handelt es sich somit um den in Fig. 3 rechts dargestellten Führungsabschnitt. Die Querschnittsansicht von Fig. 4A zeigt die Auflageteile 231, die Öffnungen 232, die Führungsteile 233, die Aussparungen 234, das Rastelement 236 und den Anschlagbereich 237.

Fig. 4B zeigt eine Querschnittsansicht eines Führungsabschnitts eines Gehäuses eines Sensors für ein Fahrzeuggetriebe, gemäß einem Ausführungsbeispiel der vorliegenden Erfindung, entlang der Schnittlinie B-B aus Fig. 3. Bei dem Führungsabschnitt handelt es sich somit um den in Fig. 3 links dargestellten Führungsabschnitt. Die Querschnittsansicht von Fig. 4B zeigt die Auflageteile 231, die Öffnungen 232, die Führungsteile 233, die Aussparungen 234 und den Anschlagbereich 237.

In den Figuren 4A und 4B sind entlang der Führungsachse die abwechselnde Anordnung der Auflageteile 233 und Aussparungen 234 in dem zweiten Führungsbereich, die abwechselnde Anordnung der Auflageteile 231 und Öffnungen 232 in dem ersten Führungsbereich sowie die versetzte Anordnung der Auflageteile 231 und Führungsteile 233 erkennbar. Jeder Auflageteil 231 ist einer einzelnen Aussparung 234 gegenüberliegend angeordnet. Jeder Führungsteil 233 ist einer einzelnen Öffnung 231 gegenüberliegend angeordnet.

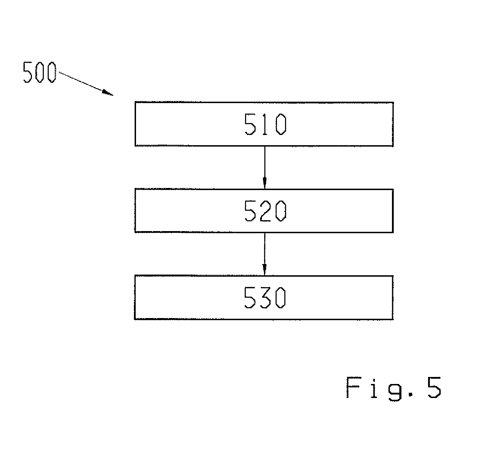

Fig. 5 zeigt ein Ablaufdiagramm eines Verfahrens 500 zum Herstellen eines Gehäuses für einen Sensor, insbesondere für ein Fahrzeuggetriebe, gemäß einem Ausführungsbeispiel der vorliegenden Erfindung. Dabei weist das Gehäuse eine Gehäuseoberfläche zum Führen eines beweglichen Sensorelements des Sensors entlang einer Führungsachse und zumindest einen entlang einer Seite der Gehäuseoberfläche angeordneten Führungsabschnitt zum Führen des beweglichen Sensorelements des Sensors entlang der Führungsachse auf. Auch weist dabei der Führungsabschnitt einen ersten Führungsbereich, einen zweiten Führungsbereich und einen den ersten und den zweiten Führungsbereich verbindenden dritten Führungsbereich auf. Ferner sind dabei eine Führungsoberfläche des ersten Führungsbereichs und eine Führungsoberfläche des zweiten Führungsbereichs einander gegenüberliegend angeordnet. Zudem weist dabei der zweite Führungsbereich entlang der Führungsachse eine Mehrzahl von alternierenden Aussparungen und Führungsteilen auf. Das Verfahren 500 weist einen Schritt des Aneinanderpressens 510 zweier Werkzeughälften auf, um eine Spritzgusskavität zu erzeugen. Dabei ist zwischen den zwei Werkzeughälften in dem aneinander gepressten Zustand eine unebene Teilungsebene gebildet. Hierbei weist eine erste der zwei Werkzeughälften erste Vorsprünge zur Bildung der Führungsoberfläche des ersten Führungsbereichs auf. Eine zweite der zwei Werkzeughälften weist zweite Vorsprünge zur Bildung der Führungsoberfläche des zweiten Führungsbereichs auf. Das Verfahren 500 weist ferner einen Schritt des Einspritzens 520 von Kunststoffmaterial in die Spritzgusskavität auf, um das Gehäuse zu gießen. Das Verfahren 500 weist auch einen Schritt des Auseinanderbewegens 530 der zwei Werkzeughälften durch eine Bewegung der zwei Werkzeughälften in entgegengesetzten Richtungen entlang einer gemeinsamen Entformungsachse auf, um das gegossene Gehäuse zu entformen. In Verbindung mit dem Verfahren kann ein Gehäuse für einen Sensor, wie das Gehäuse aus Fig. 2 bzw. Fig. 3 vorteilhaft hergestellt werden.

Im Folgenden wird unter Bezugnahme auf die Figuren 1 bis 5 ein Ausführungsbeispiel der vorliegenden Erfindung zusammenfassend erläutert. Zunächst werden noch die Hintergründe kurz erläutert. Ein Problem bei bekannten Positionssensoren kann das Herstellungsverfahren darstellen. Da die verwendeten Bauteile z. B. aus Kunststoff sind und gespritzt werden, werden meist teure Werkzeuge verwendet, um den Hinterschnitt der Schlittenführung herstellen zu. können. Hinterschnitte in Spritzwerkzeugen können nicht ohne zusätzliche, üblicherweise seitlich zu einer Öffnungsrichtung des Werkzeugs bewegte Werkzeugteile, die Werkzeugschieber, entformt werden. Bevor das Werkzeug geöffnet werden kann bzw. bevor das Kunststoffspritzteil ausgeworfen werden kann, müssen die Werkzeugschieber aus dem Werkzeug herausgefahren werden. Unter Umständen ist es sogar so, dass noch ein zusätzliches Werkzeugteil weggefahren werden muss, bevor überhaupt die Werkzeugschieber gezogen werden können. Somit es ist ein aufwändiger Werkzeugaufbau nötig, um das gewünschte Design des Kunststoffteiles herzustellen.

Gemäß einem Ausführungsbeispiel der vorliegenden Erfindung ist daher der Führungsabschnitt 130 des Sensorgehäuses 120 bzw. die seitliche Führung für das bewegliche Sensorelement verbessert. Das für den Positionssensor 110 verwendete Gehäusebauteil 120 mit dem Führungsabschnitt 130 bzw. der Schlittenführung wird so konstruiert, dass einfache Werkzeughälften bzw. Spritzwerkzeuge verwendet werden können. Das Gehäuse 120 wird dazu so aufgebaut, dass sich an dem Führungsabschnitt 130 bzw. der seitlichen Führung alternierend angeordnete Aussparungen 232, 234 und Führungsteile 231, 233 befinden. Eine solche Geometrie kann ohne Werkzeugschieber entformt werden. Die beiden Werkzeughälften tauchen ineinander ein und bilden Hohlräume, die beim Spritzprozess mit Kunststoff gefüllt werden. Durch die spezielle Geometrie gemäß dieser Erfindung können die Werkzeughälften wieder auseinandergezogen werden, ohne das Gehäuse 120 zu zerstören. Somit können so genannte Auf-Zu-Werkzeuge verwendet werden. Die Ausnehmungen 232 im ersten Führungsbereich des Führungsabschnitts 130 an der Stelle der partiellen Hinterschnitte werden durch das durchtauchende Werkzeug abgebildet. Sie befinden sich damit genau gegenüberliegend der Führungsteile 233 des zweiten Führungsbereichs des Führungsabschnitts 130. Dieser partielle Hinterschnitt ist ausreichend, um das bewegliche Sensorelement 140 bzw. den Magnetschlitten sicher zu führen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

### Bezugszeichen

- 100: Fahrzeug
- 110: Sensor
- 120: Gehäuse
- 130: Führungsabschnitt
- 140: bewegliches Sensorelement
- 222: Gehäuseoberfläche
- 224: Führungsrippe
- 225: Unterbrechung
- 231: Auflageteil
- 232: Öffnung
- 233: Führungsteil
- 234: Aussparung
- 235: dritter Führungsbereich
- 236: Rastelement
- 237: Anschlagbereich
- 500: Verfahren zum Herstellen eines Gehäuses
- 510: Schritt des Aneinanderpressens
- 520: Schritt des Einspritzens
- 530: Schritt des Auseinanderbewegens

## Patentansprüche

1. Führungsabschnitt (130) eines Gehäuses (120) für einen Sensor (110), insbesondere für ein Fahrzeuggetriebe, wobei der Führungsabschnitt (130) zum Führen eines beweglichen Sensorelements (140) des Sensors (110) entlang einer Führungsachse ausgebildet ist und einen ersten Führungsbereich (231, 232), einen zweiten Führungsbereich (233, 234) und einen den ersten (231, 232) und den zweiten Führungsbereich (233, 234) verbindenden dritten Führungsbereich (235) aufweist, wobei eine Führungsoberfläche des ersten Führungsbereichs (231, 232) und eine Führungsoberfläche des zweiten Führungsbereichs (233, 234) einander gegenüberliegend angeordnet sind und der zweite Führungsbereich (233, 234) entlang der Führungsachse eine Mehrzahl von alternierend angeordneten Aussparungen (234) und Führungsteilen (233) aufweist, **dadurch gekennzeichnet, dass** der erste Führungsbereich (231, 232) entlang der Führungsachse eine Mehrzahl von alternierend angeordneten Öffnungen (232) und Auflageteilen (231) aufweist, wobei eine einzelne der Öffnungen (232) einem einzelnen der Führungsteile (233) des zweiten Führungsbereichs (233, 234) gegenüberliegend angeordnet ist.

2. Führungsabschnitt (130) gemäß einem der vorangegangenen Ansprüche, **dadurch gekennzeichnet, dass** der erste Führungsbereich (231, 232), der zweite Führungsbereich (233, 234) und der dritte Führungsbereich (235) ein U-förmiges Querschnittsprofil des Führungsabschnitts (130) ausbilden, wobei die Führungsteile (233) des zweiten Führungsbereichs (233, 234) als Vorsprünge bezüglich des dritten Führungsbereichs (235) ausgeformt sind.

3. Führungsabschnitt (130) gemäß einem der vorangegangenen Ansprüche, **dadurch gekennzeichnet, dass** der erste Führungsbereich (231, 232) durch einen Randbereich einer Gehäuseoberfläche (222) zum Führen des beweglichen Sensorelements (140) gebildet ist.

4. Führungsabschnitt (130) gemäß einem der vorangegangenen Ansprüche, **gekennzeichnet durch** einen Anschlagbereich (237) zum Begrenzen einer Bewegung des beweglichen Sensorelements (140) entlang der Führungsachse, wobei der Anschlagbereich (237) an einem ersten Ende des Führungsabschnitts (130) angeordnet ist.

5. Führungsabschnitt (130) gemäß einem der vorangegangenen Ansprüche, **dadurch gekennzeichnet, dass** der dritte Führungsbereich (235) an einem zweiten Ende des Führungsabschnitts (130) ein flexibles Rastelement (236) zum Begrenzen einer Bewegung des beweglichen Sensorelements (140) entlang der Führungsachse aufweist.

6. Führungsabschnitt (130) gemäß einem der vorangegangenen Ansprüche, **dadurch gekennzeichnet, dass** der Führungsabschnitt (130) mittels eines Spritzgussvorgangs einstückig aus einem Kunststoffmaterial hergestellt ist.

7. Gehäuse (120) für einen Sensor (110), insbesondere für ein Fahrzeuggetriebe, wobei das Gehäuse (120) eine Gehäuseoberfläche (222) zum Führen eines beweglichen Sensorelements (140) des Sensors (110) entlang einer Führungsachse aufweist, **gekennzeichnet durch** zumindest einen Führungsabschnitt (130) gemäß einem der Ansprüche 1 bis 6, der entlang einer Seite der Gehäuseoberfläche (222) angeordnet ist.

8. Gehäuse (120) gemäß Anspruch 7, **gekennzeichnet durch** einen ersten Führungsabschnitt (130), der entlang einer ersten Seite der Gehäuseoberfläche (222) angeordnet ist, einen zweiten Führungsabschnitt (130), der entlang einer der ersten Seite gegenüberliegenden, zweiten Seite der Gehäuseoberfläche (222) angeordnet ist, und eine zumindest teilweise unterbrochene Führungsrippe (224) zum Führen des beweglichen Sensorelements (140), die an der Gehäuseoberfläche (222) zwischen dem ersten Führungsabschnitt (130) und dem zweiten Führungsabschnitt (130) angeordnet ist und sich entlang der Führungsachse erstreckt.

9. Sensor (110), insbesondere für ein Fahrzeuggetriebe, wobei der Sensor (110) ein bewegliches Sensorelement (140) aufweist, **dadurch gekennzeichnet, dass** der Sensor (110) ein Gehäuse (120) gemäß einem der Ansprüche 8 oder 9 aufweist und das bewegliche Sensorelement (140) in dem zumindest einen Führungsabschnitt (130) des Gehäuses (120) beweglich aufgenommen ist.

10. Verfahren (500) zum Herstellen eines Gehäuses (120) für einen Sensor (110), insbesondere für ein Fahrzeuggetriebe, wobei das Gehäuse (120) eine Gehäuseoberfläche (222) zum Führen eines beweglichen Sensorelements (140) des Sensors (110) entlang einer Führungsachse und zumindest einen entlang einer Seite der Gehäuseoberfläche (222) angeordneten Führungsabschnitt (130) zum Führen des beweglichen Sensorelements (140) des Sensors (110) entlang der Führungsachse aufweist, wobei der Führungsabschnitt (130) einen ersten Führungsbereich (231, 232), einen zweiten Führungsbereich (233, 234) und einen den ersten (231, 232) und den zweiten Führungsbereich (233, 234) verbindenden dritten Führungsbereich (235) aufweist, wobei eine Führungsoberfläche des ersten Führungsbereichs (231, 232) und eine Führungsoberfläche des zweiten Führungsbereichs (233, 234) einander gegenüberliegend angeordnet sind, wobei der zweite Führungsbereich (233, 234) entlang der Führungsachse eine Mehrzahl von alternierenden Aussparungen (234) und Führungsteilen (233) aufweist, **dadurch gekennzeichnet, dass** das Verfahren (500) einen Schritt des Aneinanderpressens (510) zweier Werkzeughälften, um eine Spritzgusskavität zu erzeugen, wobei zwischen den zwei Werkzeughälften in dem aneinander gepressten Zustand eine unebene Teilungsebene gebildet ist, wobei eine erste der zwei Werkzeughälften erste Vorsprünge zur Bildung der Führungsoberfläche des ersten Führungsbereichs (231, 232) aufweist und eine zweite der zwei Werkzeughälften zweite Vorsprünge zur Bildung der Führungsoberfläche des zweiten Führungsbereichs (233, 234) aufweist, einen Schritt des Einspritzens (520) von Kunststoffmaterial in die Spritzgusskavität, um das Gehäuse (120) zu gießen, und einen Schritt des Auseinanderbewegens (530) der zwei Werkzeughälften durch eine Bewegung der zwei Werkzeughälften in entgegengesetzten Richtungen entlang einer gemeinsamen Entformungsachse aufweist, um das gegossene Gehäuse (120) zu entformen.

## Claims

1. Guide section (130) of a housing (120) for a sensor (110), in particular for a vehicle gearbox, the guide section (130) being configured for guiding a movable sensor element (140) of the sensor (110) along a guide axis and having a first guide region (231, 232), a second guide region (233, 234) and a third guide region (235) which connects the first (231, 232) and the second guide region (233, 234), a guide surface of the first guide region (231, 232) and a guide surface of the second guide region (233, 234) being arranged so as to lie opposite one another, and, along the guide axis, the second guide region (233, 234) having a plurality of cut-outs (234) and guide parts (233) which are arranged in an alternating manner, **characterized in that**, along the guide axis, the first guide region (231, 232) has a plurality of openings (232) and support parts (231) which are arranged in an alternating manner, an individual one of the openings (232) being arranged so as to lie opposite an individual one of the guide parts (233) of the second guide region (233, 234).

2. Guide section (130) according to Claim 1, **characterized in that** the first guide region (231, 232), the second guide region (233, 234) and the third guide region (235) form a U-shaped cross-sectional profile of the guide section (130), the guide parts (233) of the second guide region (233, 234) being shaped as projections with regard to the third guide region (235).

3. Guide section (130) according to either of the preceding claims, **characterized in that** the first guide region (231, 232) is formed by an edge region of a housing surface (222) for guiding the movable sensor element (140).

4. Guide section (130) according to one of the preceding claims, **characterized by** a stop region (237) for limiting a movement of the movable sensor element (140) along the guide axis, the stop region (237) being arranged at a first end of the guide section (130).

5. Guide section (130) according to one of the preceding claims, **characterized in that**, at a second end of the guide section (130), the third guide region (235) has a flexible latching element (236) for limiting a movement of the movable sensor element (140) along the guide axis.

6. Guide section (130) according to one of the preceding claims, **characterized in that** the guide section (130) is produced in one piece from a plastic material by means of an injection moulding operation.

7. Housing (120) for a sensor (110), in particular for a vehicle gearbox, the housing (120) having a housing surface (222) for guiding a movable sensor element (140) of the sensor (110) along a guide axis, **characterized by** at least one guide section (130) according to one of Claims 1 to 6 which is arranged along a side of the housing surface (222).

8. Housing (120) according to Claim 7, **characterized by** a first guide section (130) which is arranged along a first side of the housing surface (222), a second guide section (130) which is arranged along a second side of the housing surface (222), which second side lies opposite the first side, and an at least partially interrupted guide rib (224) for guiding the movable sensor element (140), which guide rib (224) is arranged on the housing surface (222) between the first guide section (130) and the second guide section (130) and extends along the guide axis.

9. Sensor (110), in particular for a vehicle gearbox, the sensor (110) having a movable sensor element (140), **characterized in that** the sensor (110) has a housing (120) according to either of Claims 8 and 9 and the movable sensor element (140) is received movably in the at least one guide section (130) of the housing (120).

10. Method (500) for producing a housing (120) for a sensor (110), in particular for a vehicle gearbox, the housing (120) having a housing surface (222) for guiding a movable sensor element (140) of the sensor (110) along a guide axis and at least one guide section (130) which is arranged along a side of the housing surface (222) for guiding the movable sensor element (140) of the sensor (110) along the guide axis, the guide section (130) having a first guide region (231, 232), a second guide region (233, 234) and a third guide region (235) which connects the first (231, 232) and the second guide region (233, 234), a guide surface of the first guide region (231, 232) and a guide surface of the second guide region (233, 234) being arranged so as to lie opposite one another, the second guide region (233, 234) having a plurality of alternating cut-outs (234) and guide parts (233) along the guide axis, **characterized in that** the method (500) has a step of pressing two die halves against one another (510), in order to produce an injection moulding cavity, an uneven dividing plane being formed between the two die halves in the state in which they are pressed against one another, a first of the two die halves having first projections for forming the guide surface of the first guide region (231, 232) and a second of the two die halves having second projections for forming the guide surface of the second guide region (233, 234), a step of injecting (520) plastic material into the injection moulding cavity, in order to cast the housing (120), and a step of moving apart (530) the two die halves by way of a movement of the two die halves in opposite directions along a common demoulding axis, in order to demould the cast housing (120) .

## Revendications

1. Section de guidage (130) d'un boîtier (120) pour un capteur (110), en particulier pour une transmission de véhicule, la section de guidage (130) étant configurée pour le guidage d'un élément mobile de capteur (140) du capteur (110) le long d'un axe de guidage, et comportant une première zone de guidage (231, 232), une deuxième zone de guidage (233, 234), et une troisième zone de guidage (235) reliant la première (231, 232) à la deuxième zone de guidage (233, 234), une surface de guidage de la première zone de guidage (231, 232) et une surface de guidage de la deuxième zone de guidage (233, 234) étant disposées l'une face à l'autre, et sur la deuxième zone de guidage (233, 234) étant disposée le long de l'axe de guidage une multitude d'évidements (234) et de pièces de guidage (233) disposés en alternance, **caractérisée en ce que** la première zone de guidage (231, 232) comporte le long de l'axe de guidage une multitude d'ouvertures (232) et de pièces d'appui (231) disposés en alternance, une seule des ouvertures (232) étant disposée en face d'une seule des pièces de guidage (233) de la deuxième zone de guidage (233, 234).

2. Section de guidage (130) selon la revendication 1, **caractérisée en ce que** la première zone de guidage (231, 232), la deuxième zone de guidage (233, 234) et la troisième zone de guidage (235) constituent un profil en section transversale en forme de U de la section de guidage (130), les pièces de guidage (233) de la deuxième zone de guidage (233, 234) étant formées en tant que saillies par rapport à la troisième zone de guidage (235).

3. Section de guidage (130) selon l'une des revendications précédentes, **caractérisée en ce que** la première zone de guidage (231, 232) est formée par une zone de bordure d'une surface de boîtier (222) pour le guidage de l'élément mobile de capteur (140).

4. Section de guidage (130) selon l'une des revendications précédentes, **caractérisée par** une zone de butée (237) pour la limitation d'un mouvement de l'élément mobile de capteur (140) le long de l'axe de guidage, la zone de butée (237) étant disposée sur une première extrémité de la section de guidage (130).

5. Section de guidage (130) selon l'une des revendications précédentes, **caractérisée en ce que** la troisième zone de guidage (235) comporte sur une deuxième extrémité de la section de guidage (130) un élément d'enclenchement flexible (236) conçu pour limiter un mouvement de l'élément mobile de capteur (140) le long de l'axe de guidage.

6. Section de guidage (130) selon l'une des revendications précédentes, **caractérisée en ce que** la section de guidage (130) est fabriquée d'un seul tenant en une matière plastique en appliquant un processus de moulage par injection.

7. Boîtier (120) pour un capteur (110), en particulier pour une transmission de véhicule, le boîtier (120) comportant une surface de boîtier (222) pour le guidage d'un élément mobile de capteur (140) du capteur (110) le long d'un axe de guidage, **caractérisé par** au moins une section de guidage (130) selon l'une des revendications 1 à 6, qui est disposée le long d'un côté de la surface du boîtier (222).

8. Boîtier (120) selon la revendication 7, **caractérisé par** une première section de guidage (130) qui est disposée le long d'un premier côté de la surface du boîtier (222), une deuxième section de guidage (130) qui est disposée le long d'un deuxième côté de la surface du boîtier (222) opposé au premier côté, et comportant une nervure de guidage (224) qui est au moins partiellement interrompue pour le guidage de l'élément mobile de capteur (140), qui est placée à la surface du boîtier (222) entre la première section de guidage (130) et la deuxième section de guidage (130) et qui s'étend le long de l'axe de guidage.

9. Capteur (110), en particulier pour une transmission de véhicule, le capteur (110) comportant un élément mobile de capteur (140), **caractérisé en ce que** le capteur (110) comprend un boîtier (120) selon l'une des revendication 8 ou 9, et l'élément mobile de capteur (140) est logé de manière mobile dans l'au moins une section de guidage (130) du boîtier (120).

10. Procédé (500) pour la fabrication d'un boîtier (120) pour un capteur (110), en particulier pour une transmission de véhicule, le boîtier (120) comportant une surface de boîtier (222) pour le guidage d'un élément mobile de capteur (140) du capteur (110) le long d'un axe de guidage et au moins une section de guidage (130) disposée le long d'un côté de la surface du boîtier (222), servant au guidage de l'élément mobile de capteur (140) du capteur (110) le long de l'axe de guidage, la section de guidage (130) comportant une première zone de guidage (231, 232), une deuxième zone de guidage (233, 234) et une troisième zone de guidage (235) reliant la première (231, 232) à la deuxième zone de guidage (233, 234), une surface de guidage de la première zone de guidage (231, 232) et une surface de guidage de la deuxième zone de guidage (233, 234) étant disposées l'une face à l'autre, et sur la deuxième zone de guidage (233, 234) étant disposée le long de l'axe de guidage une multitude d'évidements (234) et de pièces de guidage (233) disposés en alternance, **caractérisé en ce que** le procédé (500) présentant une étape de compression l'une contre l'autre (510) de deux moitiés d'outil, afin de créer une cavité de moulage par injection, entre les deux moitiés d'outil dans l'état comprimé l'une contre l'autre, un plan de séparation non plan étant constitué, une première des deux moitiés d'outil comportant des premières saillies pour la formation de la surface de guidage de la première zone de guidage (231, 232) et une deuxième des deux moitiés d'outil comportant des deuxièmes saillies pour la formation de la surface de guidage de la deuxième zone de guidage (233, 234), une phase d'injection (520) de matière plastique dans la cavité de moulage par injection, afin de mouler le boîtier (120), et une phase d'écartement l'une de l'autre (530) des deux moitiés d'outil par un mouvement des deux moitiés d'outil dans des directions opposées le long d'un axe de démoulage commun, afin de démouler le boîtier (120) moulé.
